# FASCICULE DE BREVET EUROPEEN

(11) **EP 1 762 096 B1**
(45) Date de publication et mention de la délivrance du brevet: **14.03.2012**
(21) Numéro de dépôt: 05781819.7
(22) Date de dépôt: 27.06.2005
(51) Int. Cl.: H04N 21/418

(54) **PROCEDE DE CONTROLE DISTANT PAR UN OPERATEUR DE L'UTILISATION D'UN EQUIPEMENT RECEPTEUR**
FERNSTEUERUNGSVERFAHREN FÜR EINEN BENUTZER ZUR STEUERUNG DES BETRIEBES EINER EMPFANGSEINHEIT
REMOTE CONTROL METHOD ENABLING A USER TO CONTROL THE OPERATION OF A RECEIVING UNIT

(30) Priorité: 29.06.2004 FR 0451355
(43) Date de publication de la demande: 14.03.2007
(73) Titulaire: Viaccess, 92057 Paris La Defense (FR)
(72) Inventeur: BEUN, Frédéric, F-78400 CHATOU (FR); BOUDIER, Laurence, F-78400 CHATOU (FR)
(74) Mandataire: Poulin, Gérard
(86) Numéro de dépôt international: PCT/FR2005/050500
(87) Numéro de publication internationale: WO 2006/003344

(56) Documents cités:
- EP-A- 1 109 400
- EP-A- 1 353 511

## Description

### DOMAINE TECHNIQUE

L'invention se situe dans lé domaine de la lutte contre le piratage de données numériques distribuées sous forme embrouillée par un opérateur à des utilisateurs munis de droit d'accès.

Plus spécifiquement, l'invention concerne un procédé de contrôle distant par l'opérateur de l'utilisation d'un équipement récepteur dans un réseau de distribution de données numériques.

Le contrôle a notamment pour objectif de détecter toute manipulation frauduleuse destinée à désembrouiller lesdites données.

L'invention concerne également un équipement récepteur comportant un décodeur et un processeur de sécurité adapté pour mettre en oeuvre le procédé. Le processeur de sécurité est par exemple une carte à puce.

### ÉTAT DE LA TECHNIQUE ANTÉRIEURE

Dans un système de contrôle d'accès conditionnel classique la vérification du droit d'accès porte sur des conditions que doivent remplir les équipements récepteurs des utilisateurs vis-à-vis de la technologie de contrôle d'accès mise en oeuvre, de l'opérateur fournissant les données ou encore d'une stratégie commerciale de cet opérateur. Ce dernier transmet aux équipements récepteurs, via un message de contrôle d'accès ECM (pour Entitlment Control Message), les conditions d'accès aux données embrouillées et un mot de contrôle CW (pour Control Word) chiffré pour désembrouiller ces données, et via un message de gestion de titre d'accès EMM (pour Entitlement Management Message) les droits d'accès de chaque utilisateur à inscrire dans la carte à puce.

Outre les informations nécessaires au contrôle d'accès, des mécanismes de détection d'une utilisation anormale du décodeur ou de la carte à puce sont prévus dans les équipements récepteurs. Un inconvénient de ces mécanismes provient du fait qu'ils ne permettent de détecter que des situations élémentaires figées telles que par exemple des erreurs de syntaxe dans les messages ou des comportements électriques ou temporels ne correspondant pas à un gabarit prédéfini. De ce fait, les fraudeurs peuvent facilement analyser ces mécanismes et corriger les messages de détection ou les comportements électriques ou temporels des signaux hors des gabarits prédéfinis pour éviter la détection de la fraude par l'opérateur.

Le but de l'invention est de masquer efficacement aux éventuels pirates les mécanismes de détection et de sanction, mis en oeuvre par l'opérateur.

Un autre but de l'invention est de permettre à l'opérateur de contrôler dynamiquement le processus de détection et d'appliquer, à distance, une sanction appropriée à chaque fraude détectée.

Dans la suite de la description, le terme détection définit un traitement exécuté dans l'équipement récepteur consistant, par exemple, à analyser le contexte d'utilisation courant, défini par des critères fonctionnels et/ou temporels, afin de repérer l'occurrence d'une situation prédéfinie par l'opérateur.

Le terme sanction définit un traitement prédéfini exécutable par l'équipement récepteur ayant pour objectif de provoquer un fonctionnement particulier de l'équipement récepteur.

### EXPOSÉ DE L'INVENTION

L'invention est définie par les revendications.

L'invention permet ainsi à l'opérateur de faire évoluer, à distance dans le décodeur et son processeur de sécurité, les mécanismes de détection, les mécanismes de sanction et leurs relations.

Préférentiellement, le déclenchement d'une action associée à un test donné est effectué selon un séquencement temporel programmé par l'opérateur.

Selon l'invention, chaque test défini est soit un test élémentaire, soit une combinaison de tests élémentaires préprogrammés dans l'équipement récepteur, et chaque action définie associée audit test est soit une action élémentaire, soit une combinaison d'actions élémentaires préprogrammées dans l'équipement récepteur.

Le procédé selon l'invention peut être mis en oeuvre dans un équipement récepteur comportant un décodeur et un processeur de sécurité.

### BRÈVE DESCRIPTION DES DESSINS

D'autres caractéristiques et avantages de l'invention ressortiront de la description qui va suivre, prise à titre d'exemple non limitatif, en préférence aux figures annexées dans lesquelles :
- la figure 1 illustre schématiquement la structure d'un message transportant les ordres d'activation d'un test et les ordres de déclenchement d'actions associées au test activé.
- la figure 2 représente un organigramme illustrant schématiquement les étapes essentielles du procédé selon l'invention.

### EXPOSÉ DÉTAILLÉ DE MODES DE RÉALISATION PARTICULIERS

La description qui suit concerne une application particulière du procédé dans un système de diffusion de programmes audiovisuels comportant un site central dé gestion localisé chez un opérateur et un ensemble d'équipements récepteurs comportant chacun un écran, un décodeur et un processeur de sécurité constitué par une carte à puce.

Lé site central de gestion comporte un module programmable permettant à l'opérateur de définir un ensemble de tests pour détecter une utilisation anormale ou non autorisée du décodeur ou de la carte à puce, un ensemble d'actions que l'opérateur peut déclencher à tout moment en fonction du résultat du ou des tests exécutés, une liste d'associations test/action, et un séquencement temporel relatif à chaque association test/action.

Le site central de gestion est muni en outre de moyens pour transmettre à chaque décodeur une description des tests définis, une description des actions définies, une description de la liste des associations test/action et une description du séquencement temporel relatif à chaque association test/action.

Le site central de gestion comporte également un module de commande permettant à l'opérateur d'activer à distance dans chaque décodeur un ou plusieurs tests parmi les tests prédéfinis et de déclencher à distance au moins une action associée au test activé en fonction du résultat dudit test. Le déclenchement d'une action peut être fait par l'opérateur à n'importe quel moment ou selon un séquencement prédéfini dépendant de la nature des programmes diffusés. La détection d'une utilisation anormale et les sanctions subséquentes sont décorrellées dans lé temps dé sorte que lés pirates ne puissent pas reconstituer la chronologie de ces deux opérations.

Le procédé selon l'invention trouve une application dans le cas où l'opérateur souhaite cibler un parc déterminé d'équipements récepteurs. Dans ce cas, le test consiste à :
- vérifier l'authenticité du signal diffusé par l'opérateur et reçu par lé décodeur, ou
- vérifier que la carte utilisée contient l'identifiant de l'opérateur.

L'action peut consister à :
- afficher un message d'alerte, ou
- refuser le désembrouillage des programmes diffusés, ou encore
- bloquer temporairement ou définitivement le terminal et/ou la carte à puce.

Les tests et les actions peuvent être combinés en fonction du contexte d'utilisation et du type de programmes diffusés. L'opérateur envoie à chaque équipement récepteur une description des tests définis et une description des actions définies, une description dé la liste des associations test/action et une description du séquencement temporel relatif à chaque association test/action. Cet envoi peut être fait à n'importe quel moment par l'opérateur. Ces descriptions sont préalablement chiffrées et enregistrées dans une mémoire non volatile de l'équipement récepteur.

Lesdites descriptions sont transmises à l'équipement récepteur dans un message EMM sécurisé ou dans un flux privé. De même, l'ordre d'activation d'un test et l'ordre de déclenchement de l'exécution d'une action associée à un test activé sont également transmis à l'équipement récepteur dans des messages EMM sécurisés.

Dans une autre variante de réalisation de l'invention, ces ordres sont transmis à l'équipement récepteur dans un flux privé.

Après une application du procédé dans un équipement récepteur, ce dernier peut transmettre à l'opérateur un enregistrement des tests et des actions exécutés.

### ADRESSAGE DES MESSAGES EMM

Les messages EMM permettant la configuration et l'utilisation de la fonctionnalité test/action selon le procédé de l'invention sont émis dans une voie EMM d'un multiplex numérique tel que défini par le standard MPEG2/Système et les standards DVB/ETSI.

Cette voie peut diffuser des EMM transportant des données d'adressage permettant de transmettre ces EMM :
- à un décodeur particulier,
- à un groupe particulier de décodeurs,
- à tous les décodeurs.

Les messages destinés à un décodeur particulier sont des EMM-U présentant la structuré suivante :

| | | |
|---|---|---|
| EMM-U_section() { | | |
| table_id = 0x88 | | 8 bits |
| section_syntax_indicator = 0 | | 1 bit |
| DVB_reserved | | 1 bit |
| ISO_reserved | | 2 bits |
| EMM-U_section_length | | 12 bits |
| unique_adress_field | | 40 bits |
| for | (i=0; i<N; i++) { | |
| | EMM_data_byte | 8 bits |
| | } | |
| } | | |

Le paramètre unique_adress_field est l'adresse unique d'un décodeur.

Les messages destinés à un groupe particulier de décodeurs sont des EMM-S présentant la structure suivante :

| | | |
|---|---|---|
| EMM-S_section() { | | |
| table_id = 0x8E | | 8 bits |
| section_syntax_indicator = 0 | | 1 bit |
| DVB_reserved | | 1 bit |
| ISO_reserved | | 2 bits |
| EMM-S_section_length | | 12 bits |
| shared_address_field | | 24 bits |
| reserved | | 6 bits |
| data_format | | 1 bit |
| ADF_scrambling_flag | | 1 bit |
| for | (i=0; i<N; i++) { | |
| | EMM_data_byte | 8 bits |
| | } | |
| } | | |

Le paramètre shared_adress_field est l'adresse du groupe de décodeurs. Un décodeur d'un groupe est concerné par lé message si en outre il est explicitement désigné dans un champ ADF contenu dans EMM_data_byte et pouvant être chiffré selon l'information ADF_scrambling_flag.

Les messages destinés à tous les décodeurs sont des EMM-G présentant la structuré suivante :

| | | |
|---|---|---|
| EMM-G_section() { | | |
| table_id = 0x8A ou 0x8B | | 8 bits |
| section_syntax_indicator = 0 | | 1 bit |
| DVB_reserved | | 1 bit |
| ISO_reserved | | 2 bits |
| EMM-G_section_length | | 12 bits |
| for | (i=0; i<N; i++) { | |
| | EMM_data_byte | 8 bits |
| | } | |
| } | | |

### CONTENU DES MESSAGES EMM

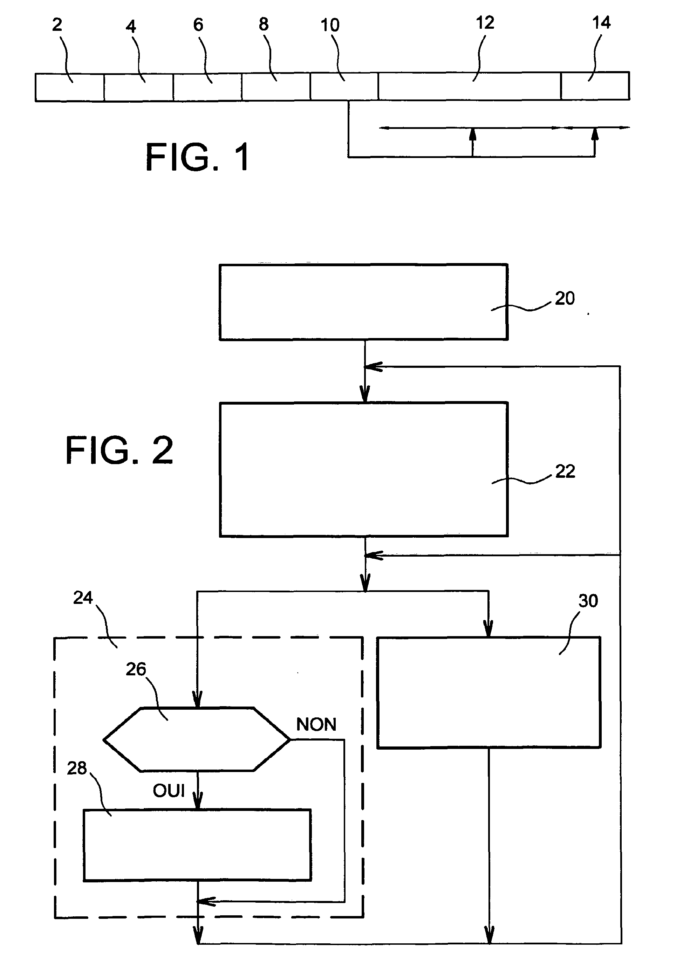

La figure 1 illustre schématiquement le contenu des données EMM_data_byte d'un message EMM de contrôle de la fonctionnalité test/action. Ce contenu dépend de la fonction à exécuter par le décodeur pour la configuration ou l'utilisation de la fonctionnalité test/action.

Les données EMM_data_byte incluent les paramètres fonctionnels suivants :
- ADF 2: complément d'adressage d'un décodeur dans un groupe de décodeurs ; ce paramètre est utile en cas d'adressage par groupe sinon il peut être omis ; il peut être chiffré,
- SOID 4 : identification de messages de contrôle de la fonctionnalité test/action selon l'invention, parmi d'autres types dé messages,
- OPID/NID 6 : identification du parc de décodeurs et du signal de l'opérateur,
- TIME 8 : données d'horodatage de l'émission du message ; ce paramètre est utilisé pour éviter le rejeu du message par un même décodeur,
- CRYPTO 10 : identification des fonctions de protection cryptographique appliquées aux paramètres FUNCTIONS 12.

Les paramètres FUNCTIONS peuvent être chiffrés et protégés par une redondance cryptographique 14.
- FUNCTIONS 12 : ensemble des paramètres décrivant la configuration et l'utilisation de la configuration et l'utilisation de la fonctionnalité test/action".

Les paramètres fonctionnels ci-dessus sont organisés librement dans les données EMM_data_byte d'un message EMM. Une implémentation préférée est la combinaison de ces paramètres par structure T L V (Type Longueur Valeur).

### CONFIGURATION ET UTILISATION DE LA FONCTIONNALITÉ TEST/ACTION

L'ensemble des paramètres FUNCTIONS 12 décrit la configuration et l'utilisation de la fonctionnalité test/action selon l'invention. Cet ensemble de paramètres est une combinaison quelconque des paramètres fonctionnels suivants :
- DESCR_TEST : ce paramètre décrit un test ; il comporte l'identifiant du test, optionnellement la description de chaque test élémentaire qui le constitue et optionnellement des paramètres de configuration du test :
   - chaque test élémentaire est décrit par un identifiant du test élémentaire et optionnellement par des paramètres de configuration du test élémentaire,
   - les paramètres de configuration du test ou d'un test élémentaire comprennent un masque générique optionnel applicable aux données d'entrée du test ou du test élémentaire et des données de comparaison optionnelles du test ou du test élémentaire.
- DESCR_ACTION : ce paramètre décrit une action ; il comporte l'identifiant de l'action, optionnellement la description de chaque action élémentaire qui la constitue et optionnellement des paramètres de configuration de l'action :
   - chaque action élémentaire est décrite par un identifiant de l'action élémentaire et optionnellement par des paramètres de configuration dé l'action élémentaire,
   - les paramètres de configuration de l'action ou d'une action élémentaire comprennent un masque générique optionnel applicable aux données d'entrée de l'action ou de l'action élémentaire et des données d'entrée optionnelles de l'action ou de l'action élémentaire.
- ASSOC_TEST_ACTION : ce paramètre décrit l'association entre un test et des actions : il comporte l'identifiant du test et une liste d'identifiants d'actions associées à ce test,
- CDE_TEST : ce paramètre permet de commander un test ; il comporte l'identifiant du test à commander, la nature de la commande (activer, désactiver, annuler le résultat) et les conditions temporelles de l'activation du test (sur daté, selon une périodicité, immédiatement, aléatoirement),
- CDE_ACTION : ce paramètre permet de commander une action : il comporte l'identifiant dé l'action à commander, la nature de la commande (déclencher, annuler un déclenchement) et les conditions temporelles du déclenchement de l'action (sur date, immédiatement, aléatoirement),

Les paramètres fonctionnels ci=dessus sont organisés librement dans l'ensemble de paramètres FUNCTIONS 12. Une implémentation préférée est la combinaison de ces paramètres par structure T L V (Type Longueur Valeur).

Les étapes essentielles du procédé selon l'invention vont maintenant être décrites en référence à la figure 2.

L'étape 20 consiste à définir fonctionnellement dans le site central de gestion et dans le récepteur des tests élémentaires et des actions élémentaires.

L'étape 22 consiste à envoyer aux équipements récepteurs une description des tests composés de tests élémentaires, une description des actions composées d'actions élémentaires, une description de la liste des associations test/action et/ou une description du séquencement temporel relatif à chaque association test/action. Cette étape est réalisée chez l'opérateur par le site central de gestion.

L'étape 24 consiste à appliquer dynamiquement le procédé dans un équipement récepteur.

Notons qu'une détection peut être conditionnelle, c'est-à-dire liée à l'occurrence d'une situation prédéfinie telle que par exemple l'introduction dans le décodeur d'une carte non autorisée. Dans ce cas, l'équipement terminal n'exécute le test prédéfini correspondant à cette situation que si le test est activé par l'opérateur et si la situation prédéfinie est détectée.

Une détection peut être inconditionnelle, c'est-à-dire indépendante du contexte d'utilisation de l'équipement terminal. Dans ce cas, l'équipement terminal exécute automatiquement lé test correspondant à une situation prédéfinie dès que ce test est activé par l'opérateur.

Le mode préféré de réalisation dé l'invention consiste à exécuter une détection et la sanction qui lui correspond selon un séquencement temporel programmé par l'opérateur. A cet effet, chaque équipement récepteur comporte en mémoire un programme comportant des instructions pour exécuter un ensemble de tests préalablement mémorisés dans le décodeur pour détecter une utilisation particulière dudit décodeur ou dudit processeur de sécurité et des instructions pour exécuter, selon le séquencement temporel pré-établi pour chaque utilisation particulière détectée, au moins une action associée au test exécuté.

L'étape 24 comporte un test 26 consistant à vérifier si une situation correspondant à une détection active est survenue ou non.

Dans l'affirmative, l'étape 28 consiste à exécuter des sanctions associées à la détection active quand ces sanctions ont été déclenchées par l'opérateur.

Le décodeur mémorise un enregistrement de la détection active et des sanctions exécutées.

Si la situation correspondant à une détection activé ne se présente pas, les sanctions associées à la détection active ne sont pas appliquées.

A l'étape 30, l'équipement terminal transmet au site central de gestion les enregistrements des détections appliquées et des sanctions éxécutées. Selon une caractéristique supplémentaire, le site central de gestion peut réinitialiser dans un équipement récepteur des détections antérieures mémorisées ou encore supprimer l'effet d'une sanction préalablement appliquée suite à une détection.

## Revendications

1. Procédé de contrôle distant par un opérateur de l'utilisation d'un équipement récepteur dans un réseau de distribution de données numériques, **caractérisé en ce qu'**il comporte les étapes suivantes :
a- définir un ensemble de tests activables à distance dans ledit équipement récepteur et dont les résultats respectifs permettent d'identifier au moins une utilisation particulière d'au moins une partie de l'équipement récepteur,
b- définir un ensemble d'actions exécutables dans ledit équipement récepteur destinées à contrôler le fonctionnement dudit équipement,
c- associer dynamiquement et à distance à chaque test défini à l'étape a) au moins une action définie à l'étape b),
d- activer à distance par l'opérateur au moins un test parmi les tests définis à l'étape a).

2. Procédé selon la revendication 1, **caractérisé en ce qu'**il comporte en outre une étape consistant à déclencher à distance au moins une action associée à un test activé en fonction du résultat dudit test.

3. Procédé selon la revendication 2, **caractérisé en ce que** le déclenchement d'une action associée à un test donné est effectué selon un séquencement temporel programmé par l'opérateur.

4. Procédé selon la revendication 1, **caractérisé en ce que** chaque test défini est soit un test élémentaire, soit une combinaison de tests élémentaires préprogrammés dans l'équipement récepteur, chaque action définie associée audit test est soit une action élémentaire, soit une combinaison d'actions élémentaires préprogrammées dans l'équipement récepteur.

5. Procédé selon la revendication 4, dans lequel l'opérateur envoie à l'équipement récepteur une description des tests définis et/ou une description des actions définies.

6. Procédé selon la revendication 1, **caractérisé en ce que** l'opérateur envoie audit équipement récepteur une description de la liste des associations test/action et/ou une description du séquencement temporel relatif à chaque association test/action.

7. Procédé selon les revendications 3, 5, ou 6, **caractérisé en ce que** ladite description des tests définis, ladite description des actions définies, ladite liste des associations test/action et/ou la description du séquencement temporel relatif à chaque association test/action sont enregistrées dans une mémoire non volatile de l'équipement récepteur.

8. Procédé selon la revendication 7, **caractérisé en ce que** les descriptions mémorisées dans la mémoire non volatile sont chiffrées.

9. Procédé selon la revendication 2, dans lequel l'équipement récepteur transmet à l'opérateur un enregistrement des tests et des actions exécutés.

10. Procédé selon les revendications 3, 5, ou 6, **caractérisé en ce que** lesdites descriptions sont transmises à l'équipement récepteur dans un message EMM sécurisé.

11. Procédé selon les revendications 3, 5, ou 6, **caractérisé en ce que** lesdites descriptions sont transmises à l'équipement récepteur dans un flux privé.

12. Procédé selon la revendication 1, **caractérisé en ce que** l'ordre d'activation d'un test est transmis à l'équipement récepteur dans un message EMM sécurisé.

13. Procédé selon la revendication 2, **caractérisé en ce que** l'ordre de déclenchement de l'exécution d'une action associée à un test actif est transmis à l'équipement récepteur dans un message EMM sécurisé.

14. Procédé selon les revendications 10, 12 ou 13, **caractérisé en ce que** ledit message EMM présente, lorsqu'il est transmis à un équipement récepteur déterminé, le format de structure de données comportant :
- un champ « table_id » de 8 bits de valeur hexadécimale 88 identifiant le message comme un message EMM-U destiné à un équipement récepteur unique,
- un champ « section_syntax_indicator » de 1 bit de valeur 0 identifiant le format de la suite du message,
- un champ « DVB_reserved » de 1 bit et un champ « ISO_reserved » de 2 bits destinés à des usages futurs,
- un champ « EMM-U_section_length » de 12 bits donnant le nombre des octets constituant la suite du message,
- un champ « unique_address_field » de 40 bits contenant l'adresse unique de l'équipement récepteur auquel est destiné le message,
- un ensemble de champs « EMM_data_byte » de 8 bits représentant les paramètres fonctionnels transportés par le message.

15. Procédé selon les revendications 10, 12 ou 13, **caractérisé en ce que** ledit message EMM présente, lorsqu'il est transmis à un groupe d'équipements récepteurs, le format de structure de données comportant :
- un champ « table_id» de 8 bits de valeur hexadécimale 8A ou 8B identifiant le message comme un message EMM-G destiné à un groupe d'équipements récepteurs,
- un champ « section_syntax_indicator » de 1 bit de valeur 0 identifiant le format de la suite du message,
- un champ « DVB_reserved » de 1 bit et un champ « ISO_reserved » de 2 bits destinés à des usages futurs,
- un champ « EMM-G_section_length » de 12 bits donnant le nombre des octets constituant la suite du message,
- un ensemble de champs « EMM_data_byte » de 8 bits représentant les paramètres fonctionnels transportés par le message,

16. Procédé selon les revendications 10, 12 ou 13, **caractérisé en ce que** ledit message EMM présente, lorsqu'il est transmis à un sous-groupe d'un groupe d'équipements récepteurs, le format de structure de données comportant:
- un champ « table_id » de 8 bits de valeur hexadécimale 8E identifiant le message comme un message EMM-S destiné à un sous-groupe d'un groupe d'équipements récepteurs,
- un champ « section_syntax_indicator » de 1 bit de valeur 0 identifiant le format de la suite du message,
- un champ « DVB_reserved » de 1 bit et un champ « ISO_reserved » de 2 bits destinés à des usages futurs,
- un champ « EMM-S_section_length » de 12 bits donnant le nombre des octets constituant la suite du message,
- un champ « shared_address_field » de 24 bits contenant l'adresse du sous-groupe d'équipements récepteurs auxquels est destiné le message,
- un champ « reserved » de 6 bits destiné à un usage futur,
- un champ « data_format » de 1 bit de valeur 0 ou 1 précisant si les paramètres fonctionnels transportés par le message sont codés selon un format fixe ou un format variable,
- un champ « ADF_scrambling_flag » de 1 bit de valeur 0 ou 1 précisant si celui des paramètres fonctionnels du message donnant la liste des équipements récepteurs concernés du sous-groupe est non-chiffré ou chiffré,
- un ensemble de champs « EMM_data_byte » de 8 bits représentant les paramètres fonctionnels transportés par le message.

17. Procédé selon la revendication 1, **caractérisé en ce que** l'ordre d'activation d'un test est transmis à l'équipement récepteur dans un flux privé.

18. Procédé selon la revendication 2, **caractérisé en ce que** l'ordre de déclenchement de l'exécution d'une action associée à un test est transmis à l'équipement récepteur dans un flux privé.

19. Procédé selon la revendication 1, **caractérisé en ce que** les données numériques distribuées représentent des programmes audiovisuels.

20. Equipement récepteur adapté pour mettre en oeuvre le procédé selon la revendication 1, comportant un décodeur et un processeur de sécurité, **caractérisé en ce qu'**il comporte en outre :
- des moyens pour exécuter un ensemble de tests prédéfinis selon la revendication 1 pour détecter une utilisation particulière du décodeur ou du processeur de sécurité,
- des moyens pour exécuter, selon un séquencement temporel pré-établi pour chaque utilisation particulière détectée, au moins une action définie selon la revendication 1 associée dynamiquement et à distance au test exécuté.

21. Equipement récepteur, selon la revendication 20, **caractérisé en ce qu'**il est relié par une voie de retour à un site central de gestion pour transmettre à ce site central un enregistrement des tests et des actions exécutés.

22. Equipement récepteur, selon la revendication 20, **caractérisé en ce que** le processeur de sécurité est une carte à puce.

23. Décodeur de l'équipement récepteur selon la revendication 20 destiné à coopérer avec le processeur de sécurité dudit équipement récepteur pour contrôler l'accès à des données numériques embrouillées distribuées par un opérateur à un parc d'équipements récepteurs, ledit décodeur **caractérisé en ce qu'**il comporte :
- une mémoire non volatile contenant au moins un test prédéfini pour détecter une utilisation particulière du décodeur ou du processeur de sécurité, et au moins une action prédéfinie et activable à distance par l'opérateur associée audit test,
- un premier module destiné à exécuter au moins un test parmi les tests mémorisés,
- un deuxième module destiné à exécuter, selon un séquencement temporel pré-établi pour chaque utilisation particulière détectée, au moins une action associée au test exécuté.

24. Système de distribution de données numériques comportant un site central de gestion et un ensemble d'équipements récepteurs selon la revendication 20, munis chacun d'un décodeur et d'un processeur de sécurité, système **caractérisé en ce que** ledit site central comporte :
- des moyens pour définir un ensemble de tests activables à distance dans chaque décodeur et dont les résultats respectifs permettent d'identifier au moins une utilisation particulière du décodeur ou du processeur de sécurité,
- des moyens pour définir un ensemble d'actions exécutables dans ledit décodeur,
- des moyens pour transmettre à chaque décodeur une description des tests définis, une description des actions définies, une description de la liste des associations test/action et/ou une description du séquencement temporel relatif à chaque association test/action,
- des moyens pour activer à distance au moins un test parmi les tests définis, et
- des moyens pour déclencher à distance au moins une action associée au test activé en fonction du résultat dudit test.

25. Programme d'ordinateur exécutable sur un ensemble d'équipements récepteurs susceptibles de recevoir des données numériques distribuées par un opérateur et comportant chacun un décodeur et un processeur de sécurité, **caractérisé en ce qu'**il comporte des instructions pour exécuter un ensemble de tests predéfinis selon la revendication 1 préalablement mémorisés dans le décodeur pour détecter une utilisation particulière dudit décodeur ou dudit processeur de sécurité et des instructions pour exécuter, selon un séquencement temporel pré-établi pour chaque utilisation particulière détectée, au moins une action définie selon la revendication 1 associé dynamiquement et à distance au test exécuté.

## Claims

1. Method for an operator remote controlling of the use of reception equipment in a digital data broadcasting network, **characterised in that** it comprises the following steps:
a- defining a set of tests that can be remotely activated in said reception equipment and the results of which can be used to identify at least one particular use of at least one part of the reception equipment,
b- defining a set of actions that can be executed in said reception equipment designed to control operation of said equipment,
c- dynamically and remotely associating at least one action defined in step b), with each test defined in step a),
d- remotely activating by the operator at least one test among the tests defined in step a).

2. Method according to claim 1, **characterised in that** the method also includes a step consisting of remotely triggering at least one action associated with a test activated as a function of the result of said test.

3. Method according to claim 2, **characterised in that** an action associated with a given test is triggered according to a time sequence programmed by the operator.

4. Method according to claim 1, **characterised in that** each defined test is either an elementary test or a combination of elementary tests pre-programmed in the reception equipment, and each defined action associated with said test is either an elementary action or a combination of elementary actions pre-programmed in the reception equipment.

5. Method according to claim 4, in which the operator sends a description of the defined tests to the reception equipment and/or a description of the defined actions.

6. Method according to claim 1, **characterised in that** the operator sends a list of test/action associations and/or a description of time sequence related to each test/action association to said reception equipment.

7. Method according to claims 3, 5, or 6, **characterised in that** said description of the defined tests, said description of the defined actions, said description of the list of test/action associations and/or the description of the time sequence related to each test/action association are recorded in a non-volatile memory of the reception equipment.

8. Method according to claim 7, **characterised in that** recorded descriptions are encrypted in non-volatile memory.

9. Method according to claim 2, in which the reception equipment transmits a record of executed tests and actions to the operator.

10. Method according to claims 3, 5, or 6, **characterised in that** said descriptions are transmitted to the reception equipment in a secure EMM message.

11. Method according to claims 3, 5, or 6, **characterised in that** said descriptions are transmitted to the reception equipment in a private data flow.

12. Method according to claim 1, **characterised in that** the order to activate a test is transmitted to the reception equipment in a secure EMU message.

13. Method according to claim 2, **characterised in that** the order to activate an action associated with an activated test is transmitted to the reception equipment in a secure EMM message.

14. Method according to claim 10, 12 or 13, **characterised in that** the data structure format of said EMM message when it is transmitted to a reception equipment comprises:
- an 8-bit « table_id » field with hexadecimal value 88 identifying the message as an EMM-U message intended to a unique reception equipment,
- a 1-bit « section_syntax_indicator » field with value equal to 0 identifying the format of the message continuation,
- a 1-bit « DVB_reserved » field and a 2-bit « ISO_reserved » field intended for future use,
- a 12-bit « EMM-U_section_length » field giving the number of bytes making up the message continuation,
- a 40-bit « unique_address_field » field containing the unique address of the reception equipment to which the message is intended,
- a set of 8-bit « EMM_data_byte » fields representing the functional parameters carried by the message.

15. Method according to claims 10, 12 or 13, **characterised in that** the data structure format of said EMM message when it is transmitted to a group of reception equipment comprises:
- an 8-bit « table_id » field with hexadecimal value 8A or 8B identifying the message as an EMM-G message intended to a group of reception equipment,
- a 1-bit « section_syntax_indicator » field with value equal to 0 identifying the format of the message continuation,
- a 1-bit « DVB_reserved » field and a 2-bit « ISO_reserved » field intended for future use,
- a 12-bit « EMM-G_section_length » field giving the number of bytes making up the message continuation,
- a set of 8-bit « EMM_data_byte » fields representing the functional parameters carried by the message,

16. Method according to claim 10, 12 or 13, **characterised in that** the data structure format of said EMM message when it is transmitted to a group of reception equipment comprises:
- an 8 bits « table_id » field with hexadecimal value 8E identifying the message as an EMM-S message intended to a sub-group in a group of reception equipment,
- a 1-bit « section_syntax indicator » field with value equal to 0 identifying the format of the message continuation,
- a 1-bit « DVB_reserved » field and a 2-bit « ISO_reserved » field intended for future use,
- a 12-bint « EMM-S_section_length » field giving the number of bytes making up the message continuation,
- a 24-bit « shared address field » field containing the address of the reception equipment sub-group to which the message is intended,
- a 6-bit « reserved » field intended for future use,
- a 1-bit « data_format » field with value equal to 0 or 1 specifying if the functional parameters carried by the message are encrypted according to a fixed or variable format,
- a 1-bit « ADF_scrambling_flag » field with value equal to 0 or 1 specifying whether or not the field containing functional parameters of the message giving the list of the concerned reception equipment in the sub-group is encrypted,
- a set of 8-bit « EMM_data_byte » fields representing the functional parameters carried by the message.

17. Method according to claim 1, **characterised in that** the order to activate a test is transmitted to the reception equipment in a private data flow.

18. Method according to claim 2, **characterised in that** the order to start execution of an action associated with a test is transmitted to the reception equipment in a private data flow.

19. Method according to claim 1, **characterised in that** broadcast digital data represent audiovisual programs.

20. Reception equipment designed to implement the method according to claim 1 comprising a decoder and a security processor, **characterised in that** it also comprises:
- means for executing a set of predefined tests according to claim 1 to detect particular use of the decoder or the security processor,
- means for executing at least one action defined in claim 1 dynamically and remotely associated with the executed test, using a time sequence predefined for each particular detected use.

21. Reception equipment according to claim 20, **characterised in that** it is connected through a backward channel to a central management site to transmit a record of the tests and actions executed, to this central site.

22. Reception equipment according to claim 20, **characterised in that** the security processor is a smart card.

23. Decoder of the reception equipment according to claim 20 designed to cooperate with the security processor of sais reception equipment to control access to scrambled digital data broadcast by an operator to a set of a reception equipment, **characterised in that** it comprises:
- a non-volatile memory containing at least one predefined test to detect particular use of the decoder or the security processor, and at least one predefined action associated with said test that can be activated remotely by the operator,
- a first module designed to execute at least one of the memorised tests,
- a second module designed to execute at least one action associated with the executed test, according to a time sequence predefined for each particular detected use.

24. System for broadcasting digital data comprising a central management site and a set of reception equipments according to claim 24, each equipment comprising a decoder and a security processor, system **characterised in that** said central site comprises:
- means for defining a set of tests that can be activated in each decoder and the results of which are used to identify at least one particular use of the decoder or the security processor,
- means for defining a set of actions that can be executed in said decoder,
- means for transmitting a description of the defined tests, a description of the defined actions, a description of the list of test/action associations and/or a description of the time sequence related to each test/action association, to each decoder,
- means for remotely activating at least one test among the defined tests, and
- means for remotely triggering at least one action associated with the activated test as a function of the result of said test.

25. Computer program that can be executed on a set of reception equipment that can receive digital data broadcast by an operator and each including a decoder and a security processor, **characterised in that** it also includes instructions to execute a set of tests predefined according to claim 1 previously memorised in the decoder to detect a particular use of said decoder or said security processor and instructions to execute at least one action defined in claim 1 dynamically and remotely associated with the executed test, according to a time sequence predefined for each particular detected use.

## Patentansprüche

1. Verfahren zur Fernkontrolle der Benutzung einer Empfangseinheit in einem Digitaldaten-Verteilungsnetz durch einen Betreiber,
**dadurch gekennzeichnet, dass** es die folgenden Schritte umfasst:
a- Festlegung einer Gruppe von Tests, die in der genannten Empfangseinheit fernaktivierbar sind und deren jeweilige Resultate ermöglichen, mindestens eine partikulare Benutzung wenigstens eines Teils der Empfangseinheit zu identifizieren,
b- Festlegung einer Gruppe von Aktionen, die in der genannten Empfangseinheit ausführbar sind und dazu bestimmt sind, den Betrieb der genannten Einheit zu kontrollieren,
c- Zuordnung, dynamisch und ferngesteuert, jedes in Schritt a) festgelegten Tests wenigstens einer in Schritt b) festgelegten Aktion,
d- Fernaktivierung wenigstens eines unter den in Schritt a) festgelegten Tests durch den Betreiber.

2. Verfahren nach Anspruch 1, **dadurch gekennzeichnet, dass** es außerdem einen Schritt umfasst, der darin besteht, ferngesteuert wenigstens eine Aktion, verknüpft mit einem in Abhängigkeit vom Resultat des genannten Tests aktivierten Test, auszulösen.

3. Verfahren nach Anspruch 2, **dadurch gekennzeichnet, dass** die Auslösung einer mit einem bestimmten Test verknüpften Aktion gemäß einer durch den Betreiber programmierten zeitlichen Reihung erfolgt.

4. Verfahren nach Anspruch 1, **dadurch gekennzeichnet, dass** jeder festgelegte Test entweder ein Elementartest ist oder eine Kombination von Elementartests, vorprogrammiert in der Empfangseinheit, wobei jede festgelegte, mit dem genannten Test verknüpfte Aktion entweder eine Elementaraktion ist oder eine Kombination von Elementaraktionen, vorprogrammiert in der Empfangseinheit.

5. Verfahren nach Anspruch 4, **dadurch gekennzeichnet**, bei dem der Betreiber der Empfangseinheit eine Beschreibung der festgelegten Tests und/oder eine Beschreibung der festgelegten Aktionen sendet.

6. Verfahren nach Anspruch 1, **dadurch gekennzeichnet, dass** der Betreiber der genannten Empfangseinheit eine Beschreibung der Liste der Test/Aktion-Verknüpfungen und/oder eine Beschreibung der zeitlichen Reihung bezüglich jeder Test/Aktion-Verknüpfung sendet.

7. Verfahren nach einem der Ansprüche 3, 5 oder 6, **dadurch gekennzeichnet, dass** die genannte Beschreibung der festgelegten Tests, die genannte Beschreibung der festgelegten Aktionen, die genannte Liste der Test/Aktion-Verknüpfungen und/oder die Beschreibung der zeitlichen Reihung bezüglich jeder Test/Aktion-Verknüpfung in einem nichtflüchtigen Speicher der Empfangseinheit abgespeichert werden.

8. Verfahren nach Anspruch 7, **dadurch gekennzeichnet, dass** die in dem nichtflüchtigen Speicher abgespeicherten Beschreibungen verschlüsselt sind.

9. Verfahren nach Anspruch 2, bei dem die Empfangseinheit dem Betreiber eine Aufzeichnung der Tests und der ausgeführten Aktionen sendet.

10. Verfahren nach den Ansprüchen 3, 5 oder 6, **dadurch gekennzeichnet, dass** die genannten Beschreibungen in einer geschützen EMM-Mitteilung an die Empfangseinheit gesendet werden.

11. Verfahren nach den Ansprüchen 3, 5 oder 6, **dadurch gekennzeichnet, dass** die genannten Beschreibungen in einem privaten Datenfluss an die Empfangseinheit gesendet werden.

12. Verfahren nach Anspruch 1, **dadurch gekennzeichnet, dass** der Befehl zur Aktivierung eines Tests in einer geschützten EMM-Mitteilung an die Empfangseinheit gesendet wird.

13. Verfahren nach Anspruch 2, **dadurch gekennzeichnet, dass** der Befehl zur Einleitung der Ausführung einer mit einem aktiven Test verknüpften Aktion in einer geschützten EMM-Mitteilung an die Empfangseinheit gesendet wird.

14. Verfahren nach Anspruch 10, 12 oder 13, **dadurch gekennzeichnet, dass** die genannte EMM-Mitteilung, wenn sie an eine bestimmte Empfangseinheit gesendet wird, das Datenstrukturformat aufweist, das umfasst:
- ein Feld "table _id" mit 8 Bits des Hexadezimalwerts 88, das die Mitteilung als eine für eine einzige Empfangseinheit bestimmte EMM-U-Mitteilung identifiziert,
- ein Feld "section_syntax_indicator" mit 1 Bit des Werts 0, welches das Format der Abfolge bzw. Fortsetzung der Mitteilung identifiziert,
- ein Feld "DVB_reserved" mit 1 Bit und ein Feld "ISO_reserved" mit 2 Bits, bestimmt für zukünftige Anwendungen,
- ein Feld "EMM-U_section_length" mit 12 Bits, das die Anzahl der die Abfolge bzw. Fortsetzung der die Mitteilung bildenden Oktetts liefert,
- ein Feld "unique_address_field" mit 40 Bits, das die Einzeladresse der Empfangseinheit enthält, für die die Mitteilung bestimmt ist,
- eine Gruppe von Feldern "EMM_data_byte" mit 8 Bits, die durch die Mitteilung transportierten funktionellen Parameter darstellend.

15. Verfahren nach den Ansprüchen 10, 12 oder 13, **dadurch gekennzeichnet, dass** die genannte EMM-Mitteilung, wenn sie an eine Empfangseinheitengruppe gesendet wird, das Datenstrukturformat aufweist, das umfasst:
- ein Feld "table _id" mit 8 Bits des Hexadezimalwerts 8A oder 8B, das die Mitteilung als eine für eine Empfangseinheitengruppe bestimmte EMM-G-Mitteilung identifiziert,
- ein Feld "section_syntax_indicator" mit 1 Bit des Werts 0, welches das Format der Abfolge bzw. Fortsetzung der Mitteilung identifiziert,
- ein Feld "DVB_reserved" mit 1 Bit und ein Feld "ISO_reserved" mit 2 Bits, bestimmt für zukünftige Anwendungen,
- ein Feld "EMM-G_section_length" mit 12 Bits, das die Anzahl der die Abfolge bzw. Fortsetzung der die Mitteilung bildenden Oktetts liefert,
- eine Gruppe von Feldern "EMM_data_byte" mit 8 Bits, die durch die Mitteilung transportierten funktionellen Parameter darstellend.

16. Verfahren nach den Ansprüchen 10, 12 oder 13, **dadurch gekennzeichnet, dass** die genannte EMM-Mitteilung, wenn sie an eine Untergruppe einer Empfangseinheitengruppe gesendet wird, das Datenstrukturformat aufweist, das umfasst:
- ein Feld "table _id" mit 8 Bits des Hexadezimalwerts 8E, das die Mitteilung als eine für eine Untergruppe einer Empfangseinheitengruppe bestimmte EMM-S-Mitteilung identifiziert,
- ein Feld "section_syntax_indicator" mit 1 Bit des Werts 0, welches das Format der Abfolge bzw. Fortsetzung der Mitteilung identifiziert,
- ein Feld "DVB_reserved" mit 1 Bit und ein Feld "ISO_reserved" mit 2 Bits, bestimmt für zukünftige Anwendungen,
- ein Feld "EMM-S_section_length" mit 12 Bits, das die Anzahl der die Fortsetzung der die Mitteilung bildenden Oktetts liefert,
- ein Feld "shared_address_field" mit 24 Bits, das die Adresse der Empfangseinheiten der Untergruppe enthält, für die die Mitteilung bestimmt ist,
- ein Feld "reserved" mit 6 Bits, bestimmt für eine zukünftige Anwendung,
- ein Feld "data_format" mit 1 Bit des Werts 0 oder 1, das präzisiert, ob die durch die Mitteilungen transportierten funktionellen Parameter gemäß einem fixen Format oder einem variablen Format codiert sind,
- ein Feld "ADF_scrambling_flag" mit 1 Bit des Werts 0 oder 1, das präzisiert, ob derjenige der funktionellen Parameter unverschlüsselt oder verschlüsselt ist, der die Liste der betreffenden Empfangseinheiten der Untergruppen liefert,
- eine Gruppe von Feldern "EMM_data_byte" mit 8 Bits, die durch die Mitteilung transportierten funktionellen Parameter darstellend.

17. Verfahren nach Anspruch 1, **dadurch gekennzeichnet, dass** der Aktivierungsbefehl eines Tests in einem privaten Datenfluss an eine Empfangseinheit gesendet wird.

18. Verfahren nach Anspruch 2, **dadurch gekennzeichnet, dass** der Befehl zur Auslösung einer mit einem Test verknüpften Aktion in einem privaten Datenfluss an die Empfangseinheit gesendet wird.

19. Verfahren nach Anspruch 1, **dadurch gekennzeichnet, dass** die verteilten digitalen Daten audiovisuelle Programme darstellen.

20. Empfangseinheit, angepasst an die Anwendung des Verfahrens nach Anspruch 1, umfassend einen Dekodierer und einen Sicherheitsprozessor,
**dadurch gekennzeichnet, dass** sie außerdem umfasst:
- Einrichtungen zur Ausführung einer Gruppe vorher festgelegter Tests gemäß Anspruch 1, um eine partikulare Benutzung des Dekodierers oder des Sicherheitsprozessors zu detektieren,
- Einrichtungen um gemäß einer vorher festgelegten zeitlichen Reihung für jede detektierte besondere Benutzung wenigstens eine gemäß Anspruch 1 festgelegte, mit dem ausgeführten Test dynamisch und ferngesteuert verknüpfte Aktion auszuführen.

21. Empfangseinheit nach Anspruch 20, **dadurch gekennzeichnet, dass** sie durch einen Rückkanal mit einer zentralen Verwaltungssite verbunden ist, um an diese Zentralsite eine Aufzeichnung der Tests und der ausgeführten Aktionen zu senden.

22. Empfangseinheit nach Anspruch 20, **dadurch gekennzeichnet, dass** der Sicherheitsprozessor eine Chipkarte ist.

23. Dekodierer der Empfangseinheit nach Anspruch 20, bestimmt zur Kooperation mit dem Sicherheitsprozessor der genannten Empfangseinheit, um den Zugriff auf verschlüsselte Digitaldaten, die ein Betreiber an einen Empfangseinheiten-Bestand verteilt, zu kontrollieren, wobei der genannte Dekodierer **dadurch gekennzeichnet ist, dass** er umfasst:
- einen nichtflüchtigen Speicher mit wenigstens einem vorher festgelegten Test zur Detektion einer partikularen Benutzung des Dekodierers oder des Sicherheitsprozessars, und wenigstens eine vorher festgelegte und durch den Betreiber fernaktivierbare, mit dem genannten Test verknüpfte Aktion,
- einen ersten Modul, um wenigstens einen Tests unter den abgespeicherten Tests auszuführen,
- einen zweiten Modul, um gemäß einer für jede detektierte partikulare Benutzung vorher festgelegten zeitlichen Reihung wenigstens eine mit dem ausgeführten Test verknüpfte Aktion auszuführen.

24. Digitaldaten-Verteilungssystem mit einer zentralen Verwaltungssite und einer Gruppe von Empfangseinheiten nach Anspruch 20, jede ausgerüstet mit einem Dekodierer und einem Sicherheitsprozessor, wobei dieses System **dadurch gekennzeichnet ist, dass** die genannte zentrale Site umfasst:
- Einrichtungen um eine Gruppe von Tests, fernaktivierbar in jedem Dekodierer, festzulegen, deren jeweiligen Resultate ermöglichen, wenigstens eine partikulare Benutzung des Dekodierers oder des Sicherheitsprozessors zu identifizieren,
- Einrichtungen um eine Gruppe von Aktionen, ausführbar in dem genannten Dekodierer, festzulegen,
- Einrichtungen um an jeden Dekodierer eine Beschreibung der festgelegten Tests, eine Beschreibung der festgelegten Aktionen, eine Beschreibung der Liste der Test/Aktion-Verknüpfungen und/oder eine Beschreibung der zeitlichen Reihung bezüglich jeder Test/Aktion-Verknüpfung zu senden,
- Einrichtungen zur Fernaktivierung wenigstens eines Tests unter den festgelegten Tests, und
- Einrichtung zur Fernauslösung wenigstens einer Aktion, die verknüpft ist mit dem in Abhängigkeit von dem Resultat des genannten Tests aktivierten Test.

25. Computerprogramm, ausführbar auf einer Gruppe von Empfangseinrichtungen, die durch einen Betreiber verteilte Digitaldaten empfangen können und von denen jede einen Dekodierer und einen Sicherheitsprozessor umfasst, **dadurch gekennzeichnet, dass** es Befehle umfasst, um eine vorher in dem Dekodierer abgespeicherte Gruppe gemäß Anspruch 1 vorher festgelegter Tests auszuführen, um eine partikulare Benutzung des genannten Dekodierers oder des genannten Sicherheitsprozessors zu detektieren, sowie Befehle, um gemäß einer für jede detektierte partikulare Benutzung vorher festgelegte zeitliche Reihung wenigstens eine gemäß Anspruch 1 festgelegte Aktion, dynamisch und ferngesteuert mit dem ausgeführten Test verknüpft, auszuführen.
